# FASCICULE DE BREVET EUROPEEN

(11) **EP 2 619 069 B1**
(45) Date de publication et mention de la délivrance du brevet: **09.09.2015**
(21) Numéro de dépôt: 11771236.4
(22) Date de dépôt: 20.09.2011
(51) Int. Cl.: B62D 21/11

(54) **BERCEAU DESTINE A ETRE SOLIDARISE A LA STRUCTURE AVANT D'UN VEHICULE COMPORTANT UNE CORNE ET CORNE POUR UN TEL BERCEAU**
HALTERUNG MIT EINEM HORN ZUR FIXIERUNG AN DER FRONTSTRUKTUR EINES FAHRZEUGES UND HORN FÜR EINE DERARTIGE HALTERUNG
CRADLE TO BE SECURED TO THE FRONT STRUCTURE OF A VEHICLE AND COMPRISING A FRAME HORN, AND FRAME HORN FOR SUCH A CRADLE

(30) Priorité: 24.09.2010 FR 1057735
(43) Date de publication de la demande: 31.07.2013
(73) Titulaire: Peugeot Citroën Automobiles SA, 78140 Vélizy Villacoublay (FR)
(72) Inventeur: KONDRATOFF, Axel, F-25550 Bavans (FR); BOUTHERIN, Christian, F-25420 Voujeaucourt (FR)
(74) Mandataire: Rosenberg, Muriel Sylvie
(86) Numéro de dépôt international: PCT/FR2011/052166
(87) Numéro de publication internationale: WO 2012/038659

(56) Documents cités:
- FR-A1- 2 922 160
- JP-A- 2008 001 307
- US-A1- 2003 107 200
- US-A1- 2004 140 659

## Description

La présente invention concerne un berceau destiné à être solidarisé à la structure avant d'un véhicule, notamment d'un véhicule automobile.

Elle concerne principalement un berceau qui comprend une traverse comportant une coquille supérieure et une coquille inférieure, solidarisées entre elles en délimitant un volume intérieur creux et une corne comportant une partie supérieure adaptée pour relier la traverse à la structure avant du véhicule et une partie inférieure solidaire de la traverse.

La zone d'implantation de ces cornes laisse peu d'espace libre, du fait de la présence de nombreux organes mécaniques, tels que la barre anti-devers et ses moyens de guidage et de positionnement, la boîte de vitesses, la transmission, les triangles se suspension, etc. Cette architecture contraignante a pour conséquence que les cornes, faute de place, n'ont pas une assise suffisante sur le berceau.

Dans le document FR 2 922 160 est décrit un berceau fixé à l'avant d'une caisse d'un véhicule automobile. Ce berceau supporte un groupe motopropulseur, des éléments de suspension pour les roues avant du véhicule, et une barre anti-devers. La barre anti-devers comporte une partie centrale transversale formant une barre de torsion, fixée par ses extrémités au berceau par des paliers, et des parties latérales liées aux éléments de suspension de roue avant. Le berceau est relié à la caisse par des moyens de fixation arrière, et de chaque côté du berceau par des moyens de fixation avant. Chaque moyen de fixation avant, qui forment des cornes, sont rapportés sur la face supérieure du berceau, et forme en même temps des chapes qui recouvrent et brident les paliers de la barre anti-devers. Ces cornes permettent de réduire l'encombrement cumulé de la fixation de la corne et des barres anti-devers, mais augmente les contraintes mécaniques sur les points de fixation des cornes sur le berceau. Un tel montage impose donc la présence de renforts pour venir rigidifier le berceau au niveau de ces fixations. Ces renforts rajoutent des pièces supplémentaires à intégrer au berceau, augmentant le coût de fabrication d'un tel berceau.

Le but de la présente invention est de fournir un berceau destiné à un véhicule, en particulier à un véhicule automobile, dans lequel chaque corne présente à la fois un faible encombrement et ne nécessite pas l'emploi d'éléments de renfort supplémentaires, facilitant l'assemblage et le coût de production d'un tel berceau.

Pour parvenir à ces buts, la présente invention a pour objet un berceau destiné à être solidarisé à la structure avant d'un véhicule, notamment d'un véhicule automobile, qui comprend une traverse comportant une coquille supérieure et une coquille inférieure, solidarisées entre elles en délimitant un volume intérieur creux, une corne comportant une partie supérieure adaptée pour relier la traverse à la structure avant du véhicule et une partie inférieure solidaire de la traverse, tel que la traverse comporte une ouverture formant un accès au volume intérieur creux, permettant à la partie inférieure de la corne d'être positionnée dans ledit volume intérieur creux, formant un élément de renfort dudit berceau.

Selon une première caractéristique de l'invention, le berceau comporte des moyens de fixation de la corne sur la traverse. Les moyens de fixation traversent la coquille supérieure et inférieure de la traverse et la partie inférieure de ladite corne. De tels moyens de fixation peuvent être constitués de boulons.

Selon une deuxième caractéristique de l'invention, le prolongement inférieur de la corne forme une entretoise en appui contre la face intérieure de la coquille supérieure et de la coquille inférieure de la traverse.

Selon une troisième caractéristique de l'invention, le berceau comporte une bride servant à maintenir en position un palier d'une barre anti-devers, les moyens de fixation servant à solidariser la corne à la traverse servent aussi à solidariser la bride sur la traverse. Le berceau comporte une plaque de guidage, solidaire de la bride, comportant une excroissance formant un pion de centrage, collaborant avec un trou de centrage formé dans la traverse, permettant d'assurer un positionnement correcte de la barre anti-devers sur la traverse.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 représente une vue en perspective d'un berceau avant d'un véhicule automobile selon l'invention ;
- la figure 2 représente une vue de détail, en perspective, de la partie avant droite du berceau avant selon l'invention ;
- la figure 3 représente une vue en coupe partielle du berceau avant ; et
- la figure 4 représente une vue en perspective d'une corne constituant une partie du berceau avant selon l'invention.

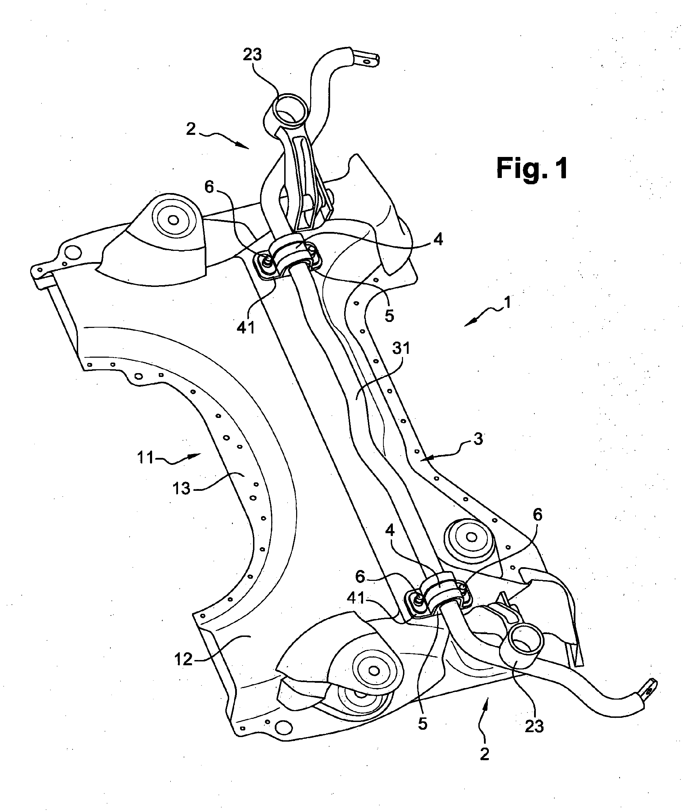

Sur la figure 1 est représentée une vue en perspective d'un berceau avant 1 d'un véhicule automobile. Le berceau avant 1 comporte deux cornes 2 positionnées symétriquement de chaque côté du berceau avant 1. La partie supérieure 23 de chacune des deux cornes 2 forme un point de fixation du berceau avant 1 sur la structure avant du véhicule (la structure avant du véhicule n'étant pas représentée). Le berceau avant 1 comporte une traverse 11 constituée d'une coquille supérieure 12 et d'une coquille inférieure 13, toutes deux en tôle emboutie solidarisées entre elles sur une majeure partie de leur surface périphérique et formant au centre un volume intérieur creux contribuant à la rigidité du berceau avant 1. Le berceau avant 1 comporte une barre anti-devers 3, constituée d'une partie centrale transversale 31 fixée à ces extrémités sur la traverse 11 par l'intermédiaire de brides 4 et de paliers 5 ; les paliers 5 sont constitués dans un matériau élastique entourant la barre anti-devers 3, laissant une certaine liberté de rotation et isolant la barre anti-devers 3 du berceau avant 1. Les brides 4 recouvrent les paliers 5 et solidarisent la barre anti-devers 3 sur la traverse 11. Les brides 4 comportent des pattes de fixation 41 qui sont solidarisées à la traverse 11 par des moyens de fixation constitués de boulons 6. Les boulons 6, comme vu ultérieurement, traversent la coquille supérieure 12 et la coquille inférieure 13 de la traverse 11.

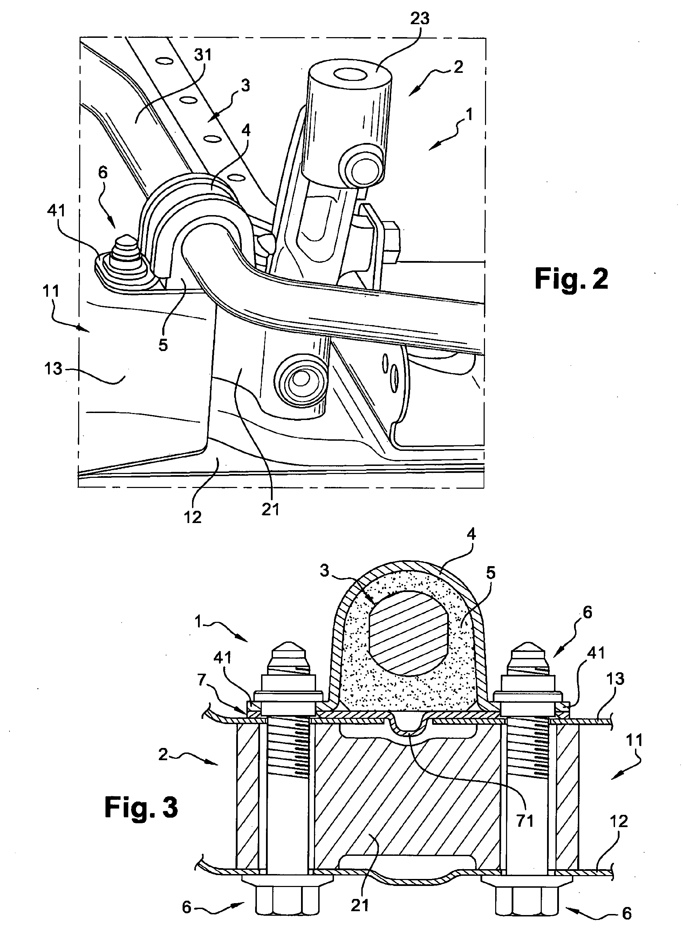

La figure 2 représente une vue de détail, en perspective, de la partie avant droite du berceau avant 1. Sur cette vue est plus particulièrement visible le positionnement d'une des deux cornes 2. A l'emplacement de cette corne 2, la coquille supérieure 12 comporte une découpe laissant ouvert le volume intérieure creux de la traverse 11. La corne 2 comporte une partie inférieure 21 se prolongeant au travers de cette découpe dans ce volume intérieur. Comme plus particulièrement visible en figure 3, la partie inférieure 21 de la corne 2 est positionnée dans le volume intérieur creux sous les pattes de fixation 41 de la bride 4. Les boulons 6 qui maintiennent la bride 4 en position, traversent aussi la partie inférieure 21 de la corne 2. La partie inférieure 21 de la corne 2 comporte une hauteur lui permettant d'être en appui supérieur contre la paroi intérieure de la coquille supérieure 12 et en appui inférieure contre la paroi intérieure de la coquille inférieure 13, formant une entretoise. L'ensemble ainsi assemblé, constitué de la coquille inférieure 13, de la partie inférieure 21 de la corne 2, de la coquille supérieure 12, des pattes de fixation 41 et des boulons 6, forme un assemblage particulièrement rigide et compact.

La figure 3 représente une vue en coupe partielle du berceau avant 1 au niveau d'une des deux brides 4. Sur cette vue sont représentés, en coupe, les coquilles inférieure 12 et supérieure 13, le palier 5, la bride 4 recouvrant le palier 5 et les boulons 6. La partie inférieure 21 de la corne 2 se prolonge sous les pattes de fixation 41 de cette bride 4, rigidifiant cet assemblage. Le berceau 1 comporte aussi une plaque de guidage 7, comportant en son centre une excroissance 71 formant un pion de guidage qui collabore avec une ouverture formée dans la coquille supérieure 13, faisant saillie dans le volume intérieur creux de la traverse 11. Lors du montage de la barre anti-devers 3 sur la traverse 11, le palier 5, la bride 4 et la plaque de guidage 7 sont préalablement assemblés formant un seul module. Le pion de guidage 71 permet d'effectuer le positionnement précis de ce module sur la traverse 11 avant sa fixation au moyen des boulons 6. Il est ainsi possible de prévoir un jeu important au niveau des trous de fixation des pattes de fixation 41 de la bride 4, facilitant le montage de ce module sur la traverse 11.

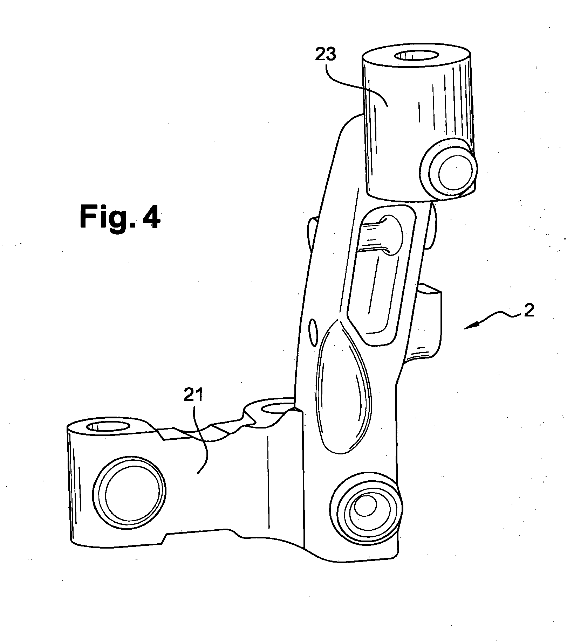

La figure 4 représente une vue en perspective de la corne 2. Sur cette vue est plus particulièrement visible la forme de la partie inférieure 21 servant à la fois à fixer la corne 2 à la traverse 11 et formant une entretoise permettant de renforcer le montage de la barre anti-devers 3 sur la traverse 11. Une telle corne 2 est réalisée par moulage, généralement en fonte d'acier ou en fonte d'aluminium. Les parties en appui contre les parois intérieures du volume intérieur creux de la traverse 11 peuvent être rectifiées par usinage de manière à garantir la géométrie du montage du berceau avant 1 sur la structure avant du véhicule.

Bien entendu, la présente invention n'est pas limitée au mode de réalisation décrit et représenté ci-dessus à titre d'exemple. Notamment le berceau considéré constitue un berceau avant d'un véhicule, mais il peut aussi constituer un berceau arrière dans le cas en particulier d'un véhicule comportant un moteur positionné en position arrière. De même le nombre des cornes reliant le berceau à la structure du véhicule peut varier suivant les contraintes de montage propre à chaque véhicule.

## Revendications

1. Berceau (1) destiné à être solidarisé à la structure avant d'un véhicule, notamment d'un véhicule automobile, qui comprend une traverse (11) comportant une coquille supérieure (12) et une coquille inférieure (13) solidarisées entre elles en délimitant un volume intérieur creux, une corne (2) comportant une partie supérieure (23) adaptée pour relier la traverse à la structure avant du véhicule et une partie inférieure (21) solidaire de ladite traverse (2), dans lequel la traverse (11) comporte une ouverture formant un accès au volume intérieur creux, permettant à la partie inférieure (21) de la corne (2) d'être positionnée dans ledit volume intérieur creux, formant un élément de renfort dudit berceau (1), le berceau (1) comportant des moyens de fixation (6) de la corne (2) sur la traverse (11), lesdits moyens de fixation (6) traversant la coquille supérieure (12) et inférieure (13) de la traverse (11) et la partie inférieure (21) de ladite corne (2), le prolongement inférieur (21) de la corne (2) formant une entretoise en appui contre la face intérieure de la coquille supérieure (12) et de la coquille inférieure (13) de ladite traverse (11), le berceau (1) comportant une bride (4) servant à maintenir en position un palier (5) d'une barre anti-devers (3), les moyens de fixation (6) servant à solidariser la corne (2) à la traverse (11) servant aussi à solidariser la bride (4) sur ladite traverse (11), le berceau (1) étant **caractérisé en ce qu'**il comporte une plaque de guidage (7), solidaire de la bride (4), comportant une excroissance (71) formant un pion de centrage, collaborant avec un trou de centrage formé dans ladite traverse (11), permettant le positionnement la barre anti-devers (3) sur la traverse (11).

2. Berceau (1) selon la revendication 1, **caractérisé en ce que** les moyens de fixation (6) sont constitués de boulons.

## Patentansprüche

1. Halterung (1), die dazu bestimmt ist, fest mit der Frontstruktur eines Fahrzeugs, insbesondere eines Kraftfahrzeugs verbunden zu werden, die einen Querträger (11) umfasst, der eine obere Schale (12) und eine untere Schale (13) umfasst, die miteinander unter Abgrenzen eines hohlen Innenvolumens fest verbunden sind, ein Horn (2), das einen Oberteil (23) umfasst, der angepasst ist, um den Querträger mit der Frontstruktur des Fahrzeugs zu verbinden, und einen Unterteil (21), der fest mit dem Querträger (2) verbunden ist, wobei der Querträger (11) eine Öffnung umfasst, die einen Zugang zu dem hohlen Innenvolumen bildet, der es dem Unterteil (21) des Horns (2) erlaubt, in dem hohlen Innenvolumen positioniert zu werden, indem ein Verstärkungselement der Halterung (1) gebildet wird, wobei die Halterung (1) Befestigungsmittel (6) des Horns (2) auf dem Querträger (11) umfasst, wobei die Befestigungsmittel (6) die obere Schale (12) und die untere Schale (13) des Querträgers (11) und den Unterteil (21) des Horns (2) durchqueren, wobei die untere Verlängerung (21) des Horns (2) einen Abstandshalter in Auflage gegen die Innenseite der oberen Schale (12) und der unteren Schale (13) des Querträgers (11) bildet, wobei die Halterung (1) einen Flansch (4) umfasst, der dazu dient, ein Lager (5) einer Querstabilisierungsstange (3) in Position zu halten, wobei die Befestigungsmittel (6) dazu dienen, das Horn (2) mit dem Querträger (11) fest zu verbinden, die auch dazu dienen, den Flansch (4) auf dem Querträger (11) fest zu verbinden, Halterung (1) **dadurch gekennzeichnet, dass** sie eine Führungsplatte (7) umfasst, die fest mit dem Flansch (4) verbunden ist, der eine Ausstülpung (71) umfasst, die einen Zentrierstift bildet, der mit einer Zentrierbohrung zusammenwirkt, die in dem Querträger (11) ausgebildet ist, indem das Positionieren der Querstabilisierungsstange (3) auf dem Querträger (11) erlaubt wird.

2. Halterung (1) nach Anspruch 1, **dadurch gekennzeichnet, dass** die Befestigungsmittel (6) aus Bolzen bestehen.

## Claims

1. A cradle (1) to be secured to the front structure of a vehicle, in particular an automobile, which includes a crossbeam (11) comprising a top shell (12) and a bottom shell (13) secured together and defining a hollow inner space, a frame horn (2) comprising a top portion (23) suitable for connecting the crossbeam to the front structure of the vehicle, and a bottom portion (21) secured to said crossbeam (2), in which the crossbeam (11) comprises an opening forming an access to the hollow inner space, enabling the bottom portion (21) of the frame horn (2) to be positioned in said hollow inner space, which forms an element for reinforcing said cradle (1), the cradle (1) comprising attachment means (6) of the frame horn (2) on the crossbeam (11), said attachment means (6) crossing the top shell (12) and bottom shell (13) of the crossbeam (11) and the bottom portion (21) of said frame horn (2), the bottom extension (21) of the frame horn (2) forming a spacer resting against the interior face of the top shell (12) and of the bottom shell (13) of said crossbeam (11), the cradle (1) comprising a flange (4) serving to hold in position a bearing (5) of an anti-roll bar (3), the attachment means (6) serving to secure the frame horn (2) to the crossbeam (11), serving also to secure the flange (4) on said crossbeam (11), the cradle (1) being **characterized in that** it comprises a guide plate (7), integral with the flange (4), comprising an excrescence (71) forming a centring pin, collaborating with a centring hole formed in said crossbeam (11), permitting the positioning of the anti-roll bar (3) on the crossbeam (11).

2. The cradle (1) according to Claim 1, **characterized in that** the attachment means (6) are constituted by bolts.
